# EUROPEAN PATENT APPLICATION

(11) **EP 1 626 036 A2**
(43) Date of publication of application: **15.02.2006**
(21) Application number: 05254607.4
(22) Date of filing: 25.07.2005
(51) Int. Cl.: C04B 35/573, C04B 35/80

(54) **Processing of sic/sic ceramic matrix composites by use of colloidal carbon black**

(30) Priority: 11.08.2004 US 916383
(71) Applicant: GENERAL ELECTRIC COMPANY, Schenectady, NY 12345 (US)
(72) Inventor: Landini, Dennis James, Newark, Delaware 19713 (US); Matsumoto, Roger Lee Ken, Newark, Delaware 19711 (US); Domanski, Daniel M., Kennett Square, Pennsylvania 19348 (US)
(74) Representative: Goode, Ian Roy

(57) **Abstract**

A method of forming a ceramic matrix composite (CMC) includes the steps of (a) providing a woven or braided cloth (12) reinforced with fibers; (b) coating (16) the fibers with a ceramics material; (c) immersing (20) the preform into a colloidal suspension of carbon black in water; (d) removing the preform from the suspension, placing the preform in a vacuum chamber (22) and evacuating the chamber until the slurry begins to boil or foam; and (e) releasing the vacuum and withdrawing the preform.

## Description

This invention relates to the production of fiber-reinforced composites and particularly those fiber-reinforced composites having dense ceramic matrices.

The development of high temperature materials in the past five decades has been paced by their need in demanding structural applications, particularly in gas turbines. The materials being used today in hot sections of gas turbines are nickel and cobalt-based super alloys. In many cases, they are currently being used at temperatures of ~1100°C.

Ceramics are refractory materials, offering stability at temperatures much higher than 1100°C., and are therefore attractive for gas turbine applications. Monolithic structural ceramics, such as SiC and Si3N4, have been available for over four decades, but have not found applications in gas turbines because of their lack of damage tolerance and catastrophic failure mode. However, ceramic matrix composites (CMCs), particularly those reinforced with continuous fibers, offer significant damage tolerance and more graceful failure modes. Melt Infiltrated (MI) SiC/SiC composites are particularly attractive for gas turbine applications because of their high thermal conductivity, excellent thermal shock resistance, creep resistance, and oxidation resistance compared to other CMCs.

A variety of processing schemes have been developed for the fabrication of MI-CMCs. In the "slurry cast" process, the fibers are first woven or braided into a cloth, which is then laid-up to form the composite preform shape. A fiber coating is then applied to the preform using a chemical vapor infiltration (CVI) process. The remaining porosity in the preform, typically 30-40%, is then partially filled by slurry casting (or slip casting) SiC particulate into the preform. The final densification step is typically by silicon melt infiltration.

Specifically, the composite preform, containing the coated SiC fibers, and SiC particulates, is heated above about 1420°C. while in contact with a source of silicon metal. Molten silicon metal readily wets SiC, and therefore is easily pulled into the remaining unfilled pores in the preforms by a capillary process. No external driving force is needed for the infiltration and there is no dimensional change of the composite preform.

An alternate resin casting technique relies on the impregnation of thermosetting resins into the pore structure as a source of carbon for the later melt infiltration step. These resins often contain glycol pore formers to render the carbon char open and accessible to conversion to SiC by the molten silicon. The resin mixtures themselves, however, are often flammable and toxic. The products of pyrolysis of these resins are also toxic and often carcinogenic. The resins typically require not only the impregnation step, but also pressure curing and pyrolysis steps to introduce pure carbon into the porous preform.

For example, in U.S. Patent No. 5,865,922, a method of producing fiber-reinforced composites having dense ceramic matrices is disclosed that includes the steps of partially densifying a fiber preform by a conventional chemical vapor infiltration (CVI) process with a suitable ceramic material to yield a rigid body having a relatively large volume fraction of interconnected pores. The partially chemical-vapor-infiltrated body is then processed by reaction forming in which the body is infiltrated with a resin mixture that is designed to produce the controlled micro-porous glassy carbon matrix. The resin mixture is made up of a relatively high char yield resin, a pore forming agent, and an acid catalyst to permit polymerization of the resin. When the resulting porous solid polymer is pyrolized to high temperature, the pore-forming agent is removed by distillation, and the solid polymer decomposes to a glassy carbon. The last step in the process is to convert the micro porous carbon of the composite's matrix into silicon carbide. This is accomplished by introducing liquid silicon or a liquid silicon alloy into the body to infiltrate the carbon and form silicon carbide. If a silicon alloy is used (such as a silicon-refractory metal alloy), the compound refractory disilicide is precipitated as the silicon reacts with the carbon. In either case, the final result is a dense matrix comprising silicon carbide and some free silicon, and in the case of alloy infiltration, some precipitated disilicide. Because of the toxic nature of these resins, it would be desirable to eliminate them from the carbon infiltration process.

This invention modifies the conventional resin casting process generally as described above by replacing the thermosetting resin mixture with a commercial, low cost, non-toxic water-based carbon slurry. Following CVI, the slurry is impregnated into the porous CMC, i.e., the fiber preform, as an environmentally friendly, inexpensive alternative to thermosetting resins. In addition, the slurry produces a porous carbon residue within the interior porosity of the CMC, eliminating the need for pore formers. In the exemplary embodiment, a commercial colloidal suspension of carbon black in water is used as the infiltrant slurry.

It is well known in the art that carbon yielding impregnants (such as furanic resins) greatly increase the wetability of SiC-based CMC's towards molten silicon. The water-based carbon slurry of this invention contains a relatively low concentration of carbon relative to furanic resin. However, since furanic resin needs to be modified with a pore former in order to provide access for the molten silicon to the interior of the part, high carbon loading is not necessary. After immersion, the preform is removed from the slurry vessel and placed in a suitable vacuum chamber. The chamber is then evacuated to a point where the slurry begins to boil or foam. The vacuum is then released and the preform removed. The preform is then fully densified by means of conventional silicon melt infiltration.

Accordingly, in one aspect, the invention relates to a method of forming a ceramic matrix composite (CMC) comprising (a) providing a woven or braided cloth reinforced with fibers; (b) coating the fibers with a ceramics material; (c) immersing the preform into a colloidal suspension of carbon black in water; (d) removing the preform from the suspension, placing the preform in a vacuum chamber and evacuating the chamber until the slurry begins to boil or foam; and (e) releasing the vacuum and withdrawing the preform.

In another aspect, the invention relates to a method of forming a ceramic matrix composite (CMC) comprising (a) partially densifying the preform to a 10-45% porosity; (b) immersing the preform into a colloidal suspension of carbon black in water; (c) placing the preform in a vacuum chamber and evacuating the chamber to a level where the slurry begins to boil or foam; (d) releasing the vacuum and withdrawing the preform; (e) placing the preform in a heated oven to remove water, leaving a carbon-powder-impregnated CMC; and immersing the carbon-powder-impregnated CMC in molten silicon to achieve a desired densification of the preform.

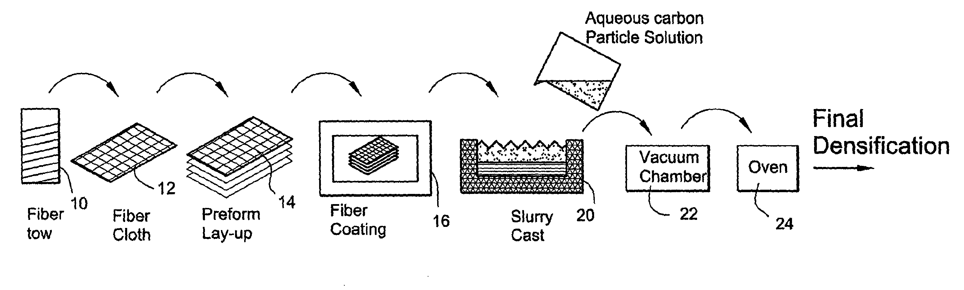

An embodiment of the invention will now be described, by way of example, with reference to the accompanying drawing, in which:

The Figure is a schematic diagram of a method of forming CMC composites.

In an exemplary embodiment of the invention, an SiC/SiC preform is initially prepared by a conventional process as described, for example, in the '922 patent. In the process, silicon carbide refractory material is employed as a matrix for a fiber-reinforced material. With reference to the drawing, a process in accordance with an exemplary embodiment is initiated by weaving or braiding a fiber tow 10 into a cloth 12. The cloth is cut and laid-up to form the composite preform 14 of desired shape. The fiber preform is then placed within a chamber 16 to undergo conventional chemical-vapor-infiltration (CVI). In the CVI process, a ceramic coating is applied to the preform fibers to render the body rigid for further processing and/or to protect the fibers from damage by the further processing. The resulting partially densified preform may have a pore volume as small as 10 volume percent or as high as 60 percent (and typically 12-28 percent).

Subsequently, the preform 14 is placed in a vessel 18 containing a colloidal suspension, or slurry, of carbon black particles in an aqueous solution. One suitable commercially available solution is sold under the trade name Aqua Dag™. It will be appreciated, however, that other aqueous solutions containing carbon black may be employed. The solution is used as an infiltrant to supply carbon to the preform after CVI and before final densification. After the porous SiC/SiC preform 14 is immersed in the slurry bath 20 for the required time, the preform is removed and placed in a vacuum chamber 22. The chamber 22 is evacuated to a level where the impregnated slurry just begins to boil or foam. The vacuum is then released and the preform withdrawn from the chamber. The preform 14 is then placed in a heated oven 24 to remove the water from the preform 14, leaving a carbon powder-impregnated CMC. The carbon powder impregnated CMC is then infiltrated with pure molten silicon to fully densify the preform. The carbon reacts with the molten silicon to form silicon carbide. The presence of carbon in the preform also provides good wetting characteristics in the final densification step, ensuring substantially complete filling of any remaining pores in the preform. The result is a dense matrix comprising silicon carbide and some free silicon, the amount of the latter depending mainly on the volume fraction of pores in the preform.

The above-described process may be utilized in the manufacture of turbine components such as gas turbine shrouds, combustor liners, and other components requiring high temperature resistance.

## Claims

1. A method of forming a ceramic matrix composite (CMC) comprising:
(a) providing a woven or braided cloth (12) reinforced with fibers;
(b) coating the fibers with a ceramics material;
(c) immersing the preform (14) into a colloidal suspension of carbon black in water;
(d) removing the preform (14) from the suspension, placing the preform (14) in a vacuum chamber (22) and evacuating the chamber until the slurry begins to boil or foam; and
(e) releasing the vacuum and withdrawing the preform.

2. The method of claim 1 wherein, after step (b), the preform (14) has a volume porosity of between 10 and 45%.

3. The method of claim 1 and further comprising:
(f) placing the preform (14) in a heated oven (24) to remove the water, leaving a carbon-powder-impregnated CMC.

4. The method of claim 3 and further comprising:
(g) infiltrating the preform (14) with molten silicon.

5. The method of claim 1 wherein step (b) is carried out by placing a fiber-reinforced preform (14) into a chamber (16) and utilizing chemical-vapor-infiltration to coat the fibers.

6. A method of forming a ceramic matrix composite (CMC) comprising:
(a) partially densifying the preform (14) to a 10-60% porosity;
(b) immersing the preform (14) into a colloidal suspension of carbon black in water;
(c) placing the preform (14) in a vacuum chamber (16) and evacuating the chamber (16) to a level where the slurry begins to boil or foam;
(d) releasing the vacuum and withdrawing the preform;
(e) placing the preform (14) in a heated oven (24) to remove water, leaving a carbon-powder-impregnated CMC; and
immersing the carbon-powder-impregnated CMC in molten silicon to achieve a desired densification of the preform.

7. The method of claim 6 wherein step (a) is carried out by placing a fiber-reinforced preform into a chamber (16) and utilizing chemical-vapor-infiltration.

8. A method of making a turbine component from a ceramic matrix composite comprising:
(a) providing a woven or braided cloth reinforced with fibers;
(b) coating the fibers with a ceramics material;
(c) immersing the preform (14) into a colloidal suspension of carbon black in water;
(d) removing the preform (14) from the suspension, placing the preform in a vacuum chamber (16) and evacuating the chamber until the slurry begins to boil or foam; and
(e) releasing the vacuum and withdrawing the preform.

9. The method of claim 8 and further comprising:
(f) placing the preform (14) in a heated oven (24) to remove the water, leaving a carbon-powder-impregnated CMC; and

10. The method of claim 9 and further comprising:
(g) infiltrating the preform (14) with molten silicon.
